# EUROPEAN PATENT APPLICATION

(11) **EP 3 101 995 A1**
(43) Date of publication of application: **07.12.2016**
(21) Application number: 14881376.9
(22) Date of filing: 28.01.2014
(51) Int. Cl.: H04W 88/02

(54) **TERMINAL EQUIPMENT PROCESSING METHOD AND TERMINAL EQUIPMENT**

(71) Applicant: Huawei Device Co., Ltd., Longgang District Shenzhen Guangdong 518129 (CN)
(72) Inventor: GAN, Yuanli, Shenzhen Guangdong 518129 (CN); WANG, Hongjun, Shenzhen Guangdong 518129 (CN); WANG, Shengli, Shenzhen Guangdong 518129 (CN); WEI, Qiuyang, Shenzhen Guangdong 518129 (CN)
(74) Representative: Maiwald Patentanwalts GmbH
(86) International application number: PCT/CN2014/071679
(87) International publication number: WO 2015/113209

(57) **Abstract**

Embodiments of the present invention provide a method for processing a terminal device and a terminal device. A preset instruction is executed by using a covered area of the terminal device. Specifically, a user input is acquired; the covered area of the terminal device is acquired according to the user input; and if the covered area is larger than a preset area, the preset instruction is executed. Using the foregoing method and the foregoing terminal device resolves technical problems of hardware wear and extra power consumption in the prior art, and brings the following beneficial effects without adding hardware: hardware wear of the terminal device caused by a user is reduced, power of the terminal device is saved, and operation efficiency of the user is improved.

## Description

### TECHNICAL FIELD

The present invention relates to the field of terminal devices, and in particular, to a method for processing a terminal device and a terminal device.

### BACKGROUND

As technologies develop, a terminal device can perceive whether it is touched. Using a touchscreen as an example, a principle of the touchscreen is as follows: After detecting that the touchscreen is touched, a touchscreen driver of a terminal recognizes information such as coordinates and pressure of a touch point, and then reports the information to a framework (framework) layer of an operating system. The framework layer obtains, by analyzing, action information of a user according to latest reported information of the touch point, and then reports the action information to an application, and the application responds to the action information of the user. By recognizing events of each touch point such as pressing and release, the framework layer analyzes the action information of the user. For example, when finding that time duration during which the user presses a touch point is less than t0, the framework layer considers that the user taps (tap) the touch point. When finding that time duration during which the user presses a touch point is t0-t1, the framework layer considers that the user presses (press) the touch point. When finding that release of a touch point is not detected within time duration of t1 after the user presses the touch point, the framework layer considers that the user touches and holds (long press) the touch point. The application responds differently according to different action information reported by the framework layer.

As the technologies develop, a capability of the terminal device to perceive whether it is touched is increasingly enhanced. However, the capability is not fully used. Usually a user operation is still completed by using a physical button, which causes a technical problem in the prior art that unnecessary wear occurs due to extremely high frequency of using some physical buttons of the terminal device, or an problem that extra power consumption of the terminal device is caused because the user intentionally reduces wear. Neither of these technical problems is well resolved in the prior art.

### SUMMARY

In embodiments of the present invention, a scheme in which a preset instruction is executed according to a covered area of a terminal device is used, which resolves technical problems of hardware wear and extra power consumption, and brings the following beneficial effects without adding hardware: hardware wear of the terminal device caused by a user is reduced, power of the terminal device is saved, and operation efficiency of the user is improved.

According to a first aspect, an embodiment of the present invention provides a method for processing a terminal device, where the method includes: acquiring a user input; acquiring a covered area of the terminal device according to the user input; and if the covered area is larger than a preset area, executing a preset instruction.

In a first possible implementation manner of the first aspect, the covered area includes: an area of at least one covered region of the terminal device, where the covered region is formed by consecutive covered points.

With reference to the first possible implementation manner of the first aspect, in a second possible implementation manner of the first aspect, when the covered area includes an area of one covered region, the covered area is the area of the covered region; or when the covered area includes areas of at least two covered regions, the covered area is a sum of the areas of the at least two covered regions.

With reference to the first possible implementation manner of the first aspect, in a third possible implementation manner of the first aspect, when the covered area includes areas of at least two covered regions, the covered area is an area of a largest covered region.

With reference to the first aspect, or the first possible implementation manner of the first aspect, or the second possible implementation manner of the first aspect, or the third possible implementation manner of the first aspect, in a fourth possible implementation manner of the first aspect, if the covered area is larger than the preset area within first preset time, the preset instruction is executed; or if the covered region moves according to a preset track, and the covered area is larger than the preset area within second preset time, the preset instruction is executed.

With reference to the fourth possible implementation manner of the first aspect, in a fifth possible implementation manner of the first aspect, that the covered region moves according to a preset track specifically includes that at least one covered region moves according to one preset track; or, at least two covered regions move according to at least two preset tracks.

With reference to the fourth possible implementation manner of the first aspect or with reference to the fifth possible implementation manner of the first aspect, in a sixth possible implementation manner of the first aspect, that the covered region moves according to a preset track includes that the covered region moves from one end of the terminal device to another end of the terminal device, where the movement includes any one of the following movements or a combination of multiple movements: the covered region moves from an upper end of the terminal device to a lower end of the terminal device; the covered region moves from the lower end of the terminal device to the upper end of the terminal device; the covered region moves from a left end of the terminal device to a right end of the terminal device; and the covered region moves from the right end of the terminal device to the left end of the terminal device.

With reference to the first aspect, or the first possible implementation manner of the first aspect, or the second possible implementation manner of the first aspect, or the third possible implementation manner of the first aspect, or the fourth possible implementation manner of the first aspect, or the fifth possible implementation manner of the first aspect, or the sixth possible implementation manner of the first aspect, in a seventh possible implementation manner of the first aspect, the preset instruction includes any one of the following instructions or a combination of multiple instructions: a screen-off instruction, a power-off instruction, an instruction for returning to a previous step, a hang-up instruction, and an instruction for returning to a main user interface; where the screen-off instruction is used to instruct the terminal device to switch from a screen-on state to a screen-off state.

With reference to the first aspect, or the first possible implementation manner of the first aspect, or the second possible implementation manner of the first aspect, or the third possible implementation manner of the first aspect, or the fourth possible implementation manner of the first aspect, or the fifth possible implementation manner of the first aspect, or the sixth possible implementation manner of the first aspect, or the seventh possible implementation manner of the first aspect, in an eighth possible implementation manner of the first aspect, the preset area is N times a surface area of the terminal device; or the preset area is N times an area of a touchscreen of the terminal device, where N is greater than 0 and less than 1.

With reference to the first aspect, or the first possible implementation manner of the first aspect, or the second possible implementation manner of the first aspect, or the third possible implementation manner of the first aspect, or the fourth possible implementation manner of the first aspect, or the fifth possible implementation manner of the first aspect, or the sixth possible implementation manner of the first aspect, or the seventh possible implementation manner of the first aspect, or the eighth possible implementation manner of the first aspect, in a ninth possible implementation manner of the first aspect, the acquiring a user input specifically includes: when the terminal device is in a screen-on state, acquiring the user input.

According to a second aspect, an embodiment of the present invention provides a terminal device, where the terminal device includes: an input acquiring unit, configured to acquire a user input; a covered area acquiring unit, configured to acquire a covered area of the terminal device according to the user input acquired by the input acquiring unit; and a processing unit, configured to receive the covered area acquired by the covered area acquiring unit, where the processing unit is configured to: acquire the covered area acquired by the covered area acquiring unit, and if the covered area is larger than a preset area, execute a preset instruction.

In a first possible implementation manner of the second aspect, the covered area received by the covered area acquiring unit includes: an area of at least one covered region of the terminal device, where the covered region is formed by consecutive covered points.

With reference to the first possible implementation manner of the second aspect, in a second possible implementation manner of the second aspect, the covered area acquiring unit is specifically configured to: when the covered area includes an area of one covered region, acquire the area of the covered region; or when the covered area includes areas of at least two covered regions, acquire a sum of the areas of the at least two covered regions.

With reference to the first possible implementation manner of the second aspect, in a third possible implementation manner of the second aspect, the covered area acquiring unit is specifically configured to: when the covered area includes areas of at least two covered regions, acquire an area of a largest covered region.

With reference to the second aspect, or the first possible implementation manner of the second aspect, or the second possible implementation manner of the second aspect, or the third possible implementation manner of the second aspect, in a fourth possible implementation manner of the second aspect, the processing unit is specifically configured to: receive the covered area acquired by the covered area acquiring unit, and if the covered area is larger than the preset area within first preset time, execute the preset instruction; or if the covered region moves according to a preset track, and the covered area is larger than the preset area within second preset time, execute the preset instruction.

With reference to the fourth possible implementation manner of the second aspect, in a fifth possible implementation manner of the second aspect, in the processing unit, that the covered region moves according to a preset track specifically includes that at least one covered region moves according to one preset track; or, at least two covered regions move according to at least two preset tracks.

With reference to the fourth possible implementation manner of the second aspect or with reference to the fifth possible implementation manner of the second aspect, in a sixth possible implementation manner of the second aspect, in the processing unit, that the covered region moves according to a preset track includes that the covered region moves from one end of the terminal device to another end of the terminal device, where the movement includes any one of the following movements or a combination of multiple movements: the covered region moves from an upper end of the terminal device to a lower end of the terminal device; the covered region moves from the lower end of the terminal device to the upper end of the terminal device; the covered region moves from a left end of the terminal device to a right end of the terminal device; and the covered region moves from the right end of the terminal device to the left end of the terminal device.

With reference to the second aspect, or the first possible implementation manner of the second aspect, or the second possible implementation manner of the second aspect, or the third possible implementation manner of the second aspect, or the fourth possible implementation manner of the second aspect, or the fifth possible implementation manner of the second aspect, or the sixth possible implementation manner of the second aspect, in a seventh possible implementation manner of the second aspect, in the processing unit, the preset instruction includes any one of the following instructions or a combination of multiple instructions: a screen-off instruction, a power-off instruction, an instruction for returning to a previous step, a hang-up instruction, and an instruction for returning to a main user interface; where the screen-off instruction is used to instruct the terminal device to switch from a screen-on state to a screen-off state.

With reference to the second aspect, or the first possible implementation manner of the second aspect, or the second possible implementation manner of the second aspect, or the third possible implementation manner of the second aspect, or the fourth possible implementation manner of the second aspect, or the fifth possible implementation manner of the second aspect, or the sixth possible implementation manner of the second aspect, or the seventh possible implementation manner of the second aspect, in an eighth possible implementation manner of the second aspect, in the processing unit, the preset area is N times a surface area of the terminal device; or the preset area is N times an area of a touchscreen of the terminal device, where N is greater than 0 and less than 1.

With reference to the second aspect, or the first possible implementation manner of the second aspect, or the second possible implementation manner of the second aspect, or the third possible implementation manner of the second aspect, or the fourth possible implementation manner of the second aspect, or the fifth possible implementation manner of the second aspect, or the sixth possible implementation manner of the second aspect, or the seventh possible implementation manner of the second aspect, or the eighth possible implementation manner of the second aspect, in a ninth possible implementation manner of the second aspect, the terminal device further includes: a state acquiring unit, where the state acquiring unit is configured to: acquire a state of the terminal device, and send the state to the input acquiring unit; and when the state that is acquired by the state acquiring unit and that is of the terminal device is a screen-on state, the input acquiring unit is configured to acquire the user input.

According to a third aspect, an embodiment of the present invention provides a terminal device, where the terminal device includes: a touchscreen, configured to acquire a user input; and a processor, configured to acquire a covered area of the terminal device according to the user input acquired by the touchscreen; where the processor is further configured to: if the covered area is larger than a preset area, execute a preset instruction.

In a first possible implementation manner of the third aspect, the covered area acquired by the processor includes: an area of at least one covered region of the terminal device, where the covered region is formed by consecutive covered points.

With reference to the first possible implementation manner of the third aspect, in a second possible implementation manner of the third aspect, the processor is specifically configured to: when the covered area includes an area of one covered region, acquire the area of the covered region; or when the covered area includes areas of at least two covered regions, acquire a sum of the areas of the at least two covered regions.

With reference to the first possible implementation manner of the third aspect, in a third possible implementation manner of the third aspect, the processor is specifically configured to: when the covered area includes areas of at least two covered regions, acquire an area of a largest covered region.

With reference to the third aspect, or the first possible implementation manner of the third aspect, or the second possible implementation manner of the third aspect, or the third possible implementation manner of the third aspect, in a fourth possible implementation manner of the third aspect, the processor is specifically configured to: if the covered area is larger than the preset area within first preset time, execute the preset instruction; or if the covered region moves according to a preset track, and the covered area is larger than the preset area within second preset time, execute the preset instruction.

With reference to the fourth possible implementation manner of the third aspect, in a fifth possible implementation manner of the third aspect, in the processor, that the covered region moves according to a preset track specifically includes that at least one covered region moves according to one preset track; or, at least two covered regions move according to at least two preset tracks.

With reference to the fourth possible implementation manner of the third aspect or with reference to the fifth possible implementation manner of the third aspect, in a sixth possible implementation manner of the third aspect, in the processing unit, that the covered region moves according to a preset track includes that the covered region moves from one end of the terminal device to another end of the terminal device, where the movement includes any one of the following movements or a combination of multiple movements: the covered region moves from an upper end of the terminal device to a lower end of the terminal device; the covered region moves from the lower end of the terminal device to the upper end of the terminal device; the covered region moves from a left end of the terminal device to a right end of the terminal device; and the covered region moves from the right end of the terminal device to the left end of the terminal device.

With reference to the third aspect, or the first possible implementation manner of the third aspect, or the second possible implementation manner of the third aspect, or the third possible implementation manner of the third aspect, or the fourth possible implementation manner of the third aspect, or the fifth possible implementation manner of the third aspect, or the sixth possible implementation manner of the third aspect, in a seventh possible implementation manner of the third aspect, in the processor, the preset instruction includes any one of the following instructions or a combination of multiple instructions: a screen-off instruction, a power-off instruction, an instruction for returning to a previous step, a hang-up instruction, and an instruction for returning to a main user interface, where the screen-off instruction is used to instruct the terminal device to switch from a screen-on state to a screen-off state.

With reference to the third aspect, or the first possible implementation manner of the third aspect, or the second possible implementation manner of the third aspect, or the third possible implementation manner of the third aspect, or the fourth possible implementation manner of the third aspect, or the fifth possible implementation manner of the third aspect, or the sixth possible implementation manner of the third aspect, or the seventh possible implementation manner of the third aspect, in an eighth possible implementation manner of the third aspect, in the processor, the preset area is N times a surface area of the terminal device; or the preset area is N times an area of a touchscreen of the terminal device, where N is greater than 0 and less than 1.

With reference to the third aspect, or the first possible implementation manner of the third aspect, or the second possible implementation manner of the third aspect, or the third possible implementation manner of the third aspect, or the fourth possible implementation manner of the third aspect, or the fifth possible implementation manner of the third aspect, or the sixth possible implementation manner of the third aspect, or the seventh possible implementation manner of the third aspect, or the eighth possible implementation manner of the third aspect, in a ninth possible implementation manner of the third aspect, the touchscreen is specifically configured to: when the terminal device is in a screen-on state, acquire the user input.

In the embodiments of the present invention, the method for processing a terminal device and the terminal device are used, which resolves a series of technical problems in the prior art that are brought by an inflexible operation of the terminal device. For example, the operation is completed by pressing a physical button or a soft key, which causes hardware wear or extra power consumption. In the embodiments of the present invention, technical effects of saving power, reducing hardware wear, and protecting user privacy are brought without adding hardware, thereby significantly improving user experience.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a flowchart of a method for processing a terminal device according to Embodiment 1 of the present invention;
FIG. 2 is a schematic diagram of a specific implementation that a terminal device acquires a covered area according to an embodiment of the present invention;
FIG. 3 is a schematic diagram of another specific implementation that a terminal device acquires a covered area according to an embodiment of the present invention;
FIG. 4 is a schematic diagram of a principle that a terminal device acquires a user input according to an embodiment of the present invention;
FIG. 5 is a schematic diagram of an implementation that a terminal device acquires a user input according to an embodiment of the present invention;
FIG. 6 is a flowchart of another method for processing a terminal device according to an embodiment of the present invention;
FIG. 7 is a schematic structural diagram of a terminal device according to an embodiment of the present invention;
FIG. 8 is a schematic structural diagram of another terminal device according to an embodiment of the present invention;
FIG. 9 is a schematic structural diagram of another terminal device according to an embodiment of the present invention; and
FIG. 10 is a schematic diagram of a method for acquiring a moving track of a covered area according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The terms used in the embodiments of the present invention are merely for the purpose of illustrating specific embodiments, and are not intended to limit the present invention. The terms "a", "said" and "the" of singular forms used in the embodiments and the appended claims of the present invention are also intended to include plural forms, unless otherwise specified in the context clearly. It should also be understood that, the term "and/or" used herein indicates and includes any or all possible combinations of one or more associated listed items. It should be further understood that the term "include" adopted in the specification specifies presence of features, integers, steps, operations, elements and/or components, with presence or attachment of other features, integers, steps, operations, elements, components, and/or their combinations not excluded.

It should be understood that although terms "first" and "second" may be used in the embodiments of the present invention to describe various types of preset time, the various types of preset time should not be limited to the terms. These terms are merely used to differentiate the various types of preset time. For example, without departing from the scope of the embodiments of the present invention, first preset time may also be referred to as second preset time, and similarly, the second preset time may also be referred to as the first preset time.

In the embodiments of the present invention, a terminal device includes but is not limited to a mobile communications terminal device such as a mobile phone, a personal digital assistant (Personal Digital Assistant, PDA), a tablet computer, and a portable terminal device (such as a portable computer), also includes a terminal device with a touchscreen such as an automatic teller machine (Automatic Teller Machine, ATM), and may further include a terminal device with a touchscreen such as a digital camera, which is not limited in the embodiments of the present invention.

In the embodiments of the present invention, "preset" refers to setting in advance, where the setting in advance may include setting in advance by a user and/or setting in advance by a system, the setting in advance may be setting in advance according to a use habit of a user, or may be setting in advance according to a feature of a terminal device, or the like, which is not limited in the embodiments of the present invention.

It should be understood that "covered" in the present invention includes "directly covered" or "indirectly covered", and further includes a floating operation on a touchscreen, which is not limited in the embodiments of the present invention.

It should be understood that in the embodiments of the present invention, a touchscreen or a screen may be used to describe various input devices and/or various output devices of a terminal device. However, in practice, various input devices and/or various output devices should not be limited to the touchscreen or the screen. Here, using the touchscreen and/or the screen is merely for easy description, and does not constitute a limitation on the embodiments of the present invention.

### EMBODIMENT 1

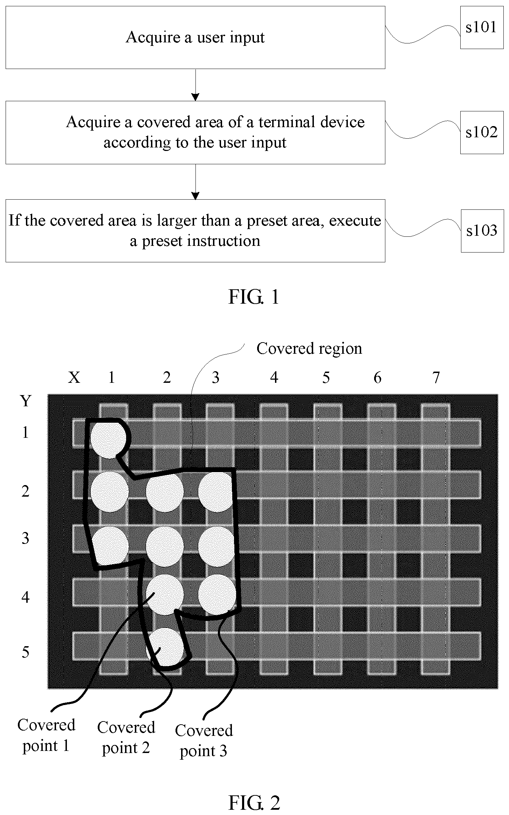

FIG. 1 is a flowchart of a method for processing a terminal device according to Embodiment 1 of the present invention. As shown in FIG. 1, the method for processing a terminal device may include:
S101. Acquire a user input.

The terminal device may acquire the user input, where the user input may be coverage that is performed on the terminal device by a user, where the coverage includes coverage that the user directly touches the terminal device, also includes coverage that the user touches the terminal device through some objects (for example, gloves, clothes, and a stylus), and may further include coverage that is performed on the terminal device by the user within a specific scope nearby the terminal device; in this coverage, the user does not directly touch the terminal device, which belongs to a floating operation. It should be understood that this input may further include an input performed in any manner that can be recognized by the terminal device. The coverage in this embodiment of the present invention includes multiple manners, which may bring a beneficial effect of easy use for the user. The user may choose to touch the terminal device, not to touch the terminal device, or to touch the terminal device with gloves, which leads to easy use for the user, and increases a scenario that may be used by the user.

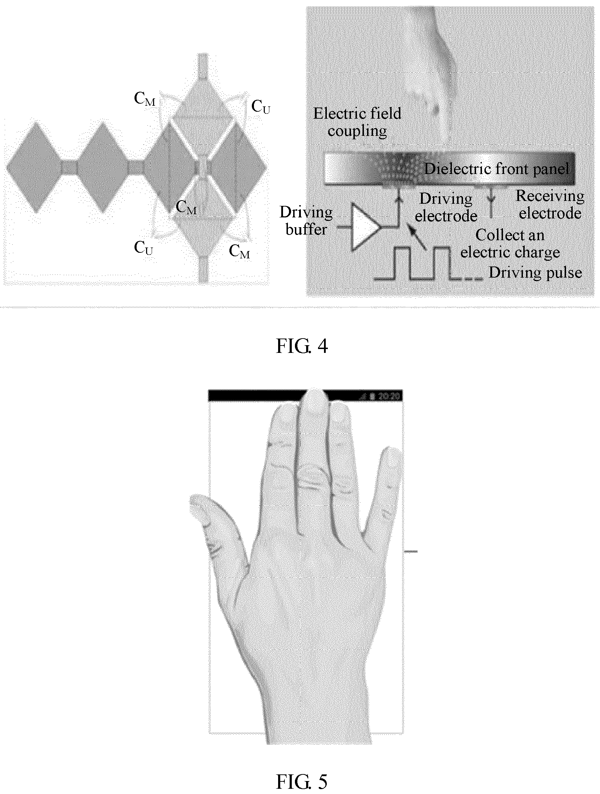

Optionally, as shown in FIG. 5, the user covers a touchscreen of the terminal device with a hand, which belongs to a user input. Similarly, the user holds the terminal device, which may also be referred to as a user input, which is not limited in this embodiment of the present invention.

S102. Acquire a covered area of the terminal device according to the user input.

The terminal device may obtain the covered area of the terminal device according to the user input, that is, for the terminal device, how large an area is covered. The covered area includes: an area of at least one covered region of the terminal device, where the covered region is formed by consecutive covered points.

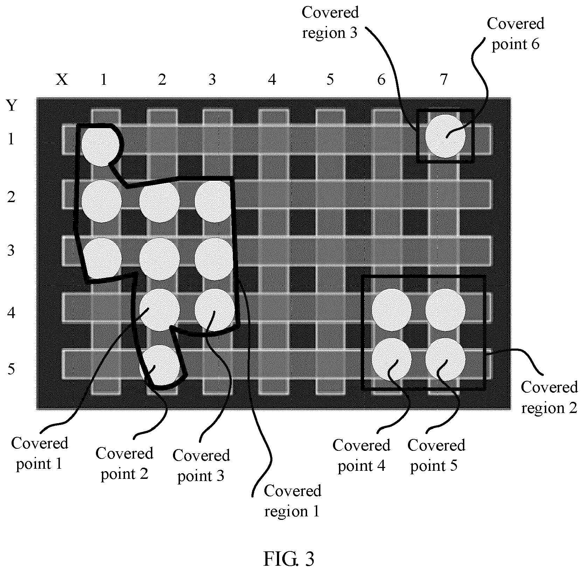

The terminal device may obtain a covered point according to the user input. As shown in FIG. 3, a covered point 1, a covered point 2, a covered point 3, a covered point 4, a covered point 5, a covered point 6, and the like may be seen. Of these covered points, some covered points are consecutive, for example, the covered point 1, the covered point 2, and the covered point 3, or the covered point 4 and the covered point 5. Some covered points are inconsecutive, for example, the covered point 1 and the covered point 4, and the like. The consecutive covered points may form a covered region. As shown in FIG. 3, the consecutive covered points form a covered region 1, a covered region 2, and a covered region 3. Therefore, when the terminal device is covered, one or more covered regions may be formed.

Optionally, when the covered area includes an area of one covered region, the covered area is the area of the covered region. As shown in FIG. 2, when the covered points are all consecutive, one covered region is formed, and an area of the region is the covered area.

Optionally, when the covered area includes areas of at least two covered regions, the covered area is a sum of the areas of the at least two covered regions. The "at least two" includes "two". Description of this embodiment of the present invention is given by using FIG. 3 as an example. The covered area may include a sum of areas of the covered region 1 and the covered region 2, or include a sum of areas of the covered region 1 and the covered region 3, or may include a sum of areas of the covered region 2 and the covered region 3, or may include a sum of areas of the covered region 1, the covered region 2, and the covered region 3. Specifically, a sum of areas of two, three, or more covered regions is selected as the covered area, and an area of which covered region is selected, which is not limited in this embodiment of the present invention, and may be selected by the user or the terminal device according to an actual product, a user requirement, or the like.

Optionally, when the covered area includes areas of at least two covered regions, the covered area is an area of a largest covered region. As shown in FIG. 3, the covered area is an area of a largest covered region of the covered region 1, the covered region 2, and the covered region 3, that is, the covered area is an area of the covered region 1.

Optionally, the following uses an example in which the user touches a terminal device including a capacitive touchscreen with a hand, to illustrate how the terminal device acquires a covered area. It should be understood that the touchscreen may further be any other touchscreen that can receive the user input, such as a resistive touchscreen or the like. Here, the capacitive touchscreen is used merely for easy description. Similarly, in addition to the touchscreen of the terminal device, other components of the terminal device, for example, any apparatus that can receive the user input, such as a housing, are all included in a scope of this embodiment of the present invention. As shown in FIG. 2, FIG. 3, and FIG. 4, the terminal device scans the touchscreen at a frequency of mHz (m is a variable whose value range is a positive number greater than 0), so as to check whether the touchscreen is covered by an object. Each time the touchscreen is scanned, all points (X₁, Y₁), (X₂, Y₂), ..., (Xₙ, Yₙ) on the touchscreen are scanned, and statuses of all the points are acquired. When a finger of the user touches the touchscreen, coupling capacitance decreases. The terminal device determines, according to a change of the capacitance, whether the touchscreen is covered by the finger of the user. The covered region is formed by one or more covered points according to a feature of the touchscreen. The terminal device acquires coordinates of the covered point and the covered point. The terminal device determines, according to the coordinates of the covered point, which covered points are consecutive covered points. The consecutive covered points form the covered region (as shown in FIG. 3, the consecutive covered points form three covered regions), and the covered area may be then obtained according to these covered regions.

There are multiple methods for acquiring the covered area, which resolves a technical problem in the prior art that a misoperation is likely to occur. The user or the terminal device may determine, according to an actual situation, how to obtain the covered area, which brings a beneficial effect of improving operation accuracy.

Optionally, when there are at least two covered regions, step S103 is not executed. Alternatively, when there are at least two covered regions, a determining result of step S103 is that the covered area is not larger than a preset area. This scheme may also bring the beneficial effect of improving the operation accuracy.

Optionally, when the terminal device is in a screen-on state, step S102 is executed; otherwise, step S102 is not executed.

S103. If the covered area is larger than a preset area, execute a preset instruction.

In step S102, the covered area may be obtained. The terminal device compares sizes of the covered area and the preset area, and if the covered area is larger than the preset area, the terminal device executes the preset instruction.

Optionally, step S103 specifically includes: S1031. If the covered area is larger than the preset area within first preset time, execute the preset instruction. If the covered area is larger than the preset area within specific time, it is considered that a condition is satisfied, and the terminal device executes the preset instruction. Using an example in which the user touches the terminal device including a capacitive touchscreen with the hand, the terminal device scans the touchscreen at the frequency of mHz (m is a variable whose value range is a positive number greater than 0) to obtain the covered area. Within the first preset time, the terminal device scans the touchscreen for n (n is a variable whose value range is a positive number greater than 0) times, and if a covered area obtained after each scan is larger than the preset area, the terminal device executes the preset instruction.

Optionally, step S103 specifically includes: S1032. If the covered region moves according to a preset track, and the covered area is larger than the preset area within second preset time, execute the preset instruction. Step S1032 includes two conditions. Condition 1: the covered region moves according to the preset track; condition 2: the covered area is larger than the preset area within the second preset time. When both condition 1 and condition 2 are satisfied, the terminal device executes the preset instruction. The terminal device may determine condition 1 and condition 2 at the same time, or may, after one condition is satisfied, determine the other condition, which is not limited in this embodiment of the present invention. A specific implementation manner of condition 2 in step S1032 may be the same as a method for determining whether the covered area is larger than the preset area within the first preset time in step S1031, which is not described herein again.

Optionally, that the covered area moves according to the preset track in condition 1 may mean that a shape of a track that is formed due to movement of the covered region is consistent with a shape of the preset track, or may mean that a start point of the covered region falls within a range of a first preset region, and an end point falls within a range of a second preset region. The preset track in condition 1 does not require a fixed start point and/or a fixed end point, and also does not need to be a track of a fixed moving route. When there are multiple covered regions, it may be that all covered regions move according to the preset track, and condition 1 is satisfied; or, it may be that some (including the case of "one") covered regions move according to the preset track, and condition 1 is satisfied. Specifically, it is either all or some covered regions that move according to the preset track, and when it is some covered regions that move according to the preset track, which covered regions are selected, which is not limited in this embodiment of the present invention. Optionally, condition 1 in step S1032 may be specifically that the covered region moves from one end of the terminal device to another end of the terminal device, where the movement includes any one of the following movements or a combination of multiple movements: the covered region moves from an upper end of the terminal device to a lower end of the terminal device; the covered region moves from the lower end of the terminal device to the upper end of the terminal device; the covered region moves from a left end of the terminal device to a right end of the terminal device; and the covered region moves from the right end of the terminal device to the left end of the terminal device. Optionally, the preset track may include a movement estimation from upper left to lower right, from lower right to upper left, from upper right to lower left, or from lower left to upper right. In this embodiment of the present invention, there may be multiple random combinations for the preset track, so that an implementation scheme of the present invention is flexible and diverse, better meeting a personalized requirement of the user. It should be understood that the track may be straight, or certainly may be bendy, which is not limited in this embodiment of the present invention.

Optionally, that the covered region moves according to a preset track includes that at least one covered region moves according to one preset track, or may include that at least two covered regions move according to at least two preset tracks.

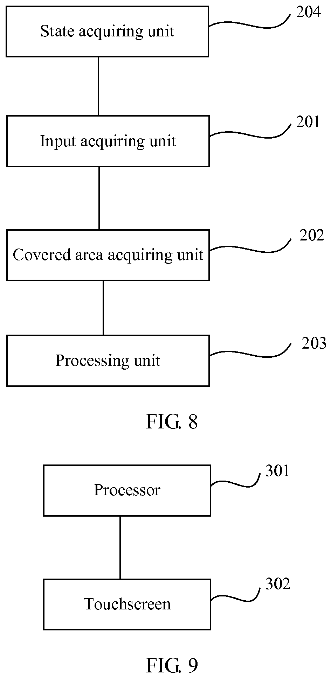

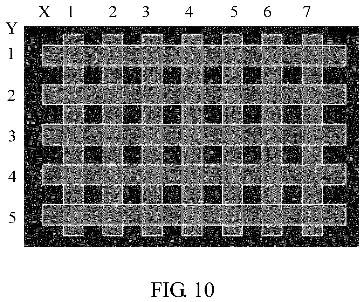

Optionally, an example in which a palm of the user flicks the terminal device including the touchscreen is used to describe that the covered region moves from the one end of the terminal device to the another end of the terminal device, and the terminal device scans the touchscreen at the frequency of mHz (m is a variable whose value range is a positive number greater than 0) to obtain the covered region. When the palm of the user flicks the touchscreen from the top to the bottom, the covered region moves from the upper end of the terminal device to the lower end of the terminal device. Specifically, as shown in FIG. 10, when the palm flicks the touchscreen, the terminal device obtains, by scanning the touchscreen, a minimum value Y1 of the covered region in a Y-axis direction; obtains, by scanning for the second time, a minimum value Y2 of the covered region in the Y-axis direction; obtains, by scanning for the third time, a minimum value Y3 of the covered region in the Y-axis direction; and obtains, by scanning for the N^{th} time, a minimum value YN (N is a positive integer greater than 0) of the covered region in the Y-axis direction; where Y1, Y2, Y3...YN roughly satisfy a law of Y1<Y2<Y3<...<YN. Contrarily, when the palm of the user flicks the touchscreen from the bottom to the top, the covered region moves from the lower end of the terminal device to the upper end of the terminal device, and Y1, Y2, Y3...YN roughly satisfy a law of Y1>Y2>Y3>...>YN. When the palm of the user flicks the touchscreen from the left to the right, the covered region moves from the left end of the terminal device to the right end of the terminal device. Specifically, as shown in FIG. 9, when the palm flicks the touchscreen, the terminal device obtains, by scanning the touchscreen, a minimum value X1 of the covered region in an X-axis direction; obtains, by scanning for the second time, a minimum value X2 of the covered region in the X-axis direction; obtains, by scanning for the third time, a minimum value X3 of the covered region in the X-axis direction; and obtains, by scanning for the N^{th} time, a minimum value XN (N is a positive integer greater than 0) of the covered region in the X-axis direction; where X1, X2, X3...XN roughly satisfy a law of X1<X2<X3<...<XN. Contrarily, when the palm of the user flicks the touchscreen from the right to the left, the covered region moves from the right end of the terminal device to the left end of the terminal device, and X1, X2, X3...XN roughly satisfy a law of X1>X2>X3>...>YN. When the palm of the user flicks the touchscreen from the upper left to the lower right, the covered region moves from an upper left end of the terminal device to a lower right end of the terminal device. Specifically, as shown in FIG. 10, when the palm flicks the touchscreen, the terminal device obtains, by scanning the touchscreen, a minimum value X1 and a minimum value Y1 that are of the covered region in X-axis and Y-axis directions; obtains, by scanning for the second time, a minimum value X2 and a minimum value Y2 that are of the covered region in the X-axis and Y-axis directions; obtains, by scanning for the third time, a minimum value X3 and a minimum value Y3 that are of the covered region in the X-axis and Y-axis directions; and obtains, by scanning for the N^{th} time, a minimum value XN and a minimum value YN (N is a positive integer greater than 0) that are of the covered region in the X-axis and Y-axis directions; where X1, X2, X3...XN roughly satisfy a law of X1<X2<X3<...<XN, and Y1, Y2, Y3...YN roughly satisfy a law of Y1<Y2<Y3<...<YN. Contrarily, when the palm of the user flicks the touchscreen from the lower right to the upper left, the covered region moves from the lower right end of the terminal device to the upper left end of the terminal device, and X1, X2, X3...XN roughly satisfy a law of X1>X2>X3>...>YN, and Y1, Y2, Y3...YN roughly satisfy a law of Y1>Y2>Y3>...>YN. It should be understood that the foregoing is only a possible implementation scheme of this embodiment of the present invention. In practice, there are multiple algorithms to determine the movement of the covered region, which is not limited in this embodiment of the present invention.

Optionally, in step S1031 and step S1032, the first preset time and the second preset time may be a time segment. In this time segment, the covered area acquired by the terminal device is larger than the preset area. Alternatively, the first preset time and the second preset time may be a preset quantity of times. When a covered area acquired by the terminal device is larger than the preset area, the terminal device records that the covered area is larger than the preset area once. When a covered area acquired by the terminal device again is larger than the preset area, the terminal device records that the covered area is larger than the preset area twice. When the quantity of times is larger than the preset quantity of times, it is considered that the covered area is larger than the preset area within the first preset time or the second preset time. Meanwhile, a record of the quantity of times may be a record within third preset time, and if the third preset time expires, a quantity of times is recorded again. It should be understood that the first preset time, the second preset time, and the third preset time here may be the same or may be different. In this embodiment of the present invention, the preset time may be preset and be acquired in multiple manners, so that an implementation scheme of the present invention is flexible and diverse, better meeting a personalized requirement of the user.

Optionally, in step S1031 and step S1032, the preset area is N times a surface area of the terminal device, where N is greater than 0 and less than 1. The terminal device may have multiple surfaces. The preset area may be a surface area of any one of the surfaces, or may be a sum of at least two surface areas. Which one or which several surfaces are specifically selected may be preset by a system or the user, which is not limited in this embodiment of the present invention.

Optionally, in step S1031 and step S1032, the preset area is N times an area of a touchscreen of the terminal device, where N is greater than 0 and less than 1. As shown in FIG. 5, the terminal device includes the touchscreen, and the preset area of the terminal device is N times the area of the touchscreen. In this embodiment of the present invention, the preset area may be 30% to 80% of the area of the touchscreen, and preferably, may be 50% of the area of the touchscreen.

Optionally, when the preset area is N times the area of the touchscreen of the terminal device, the covered points are points that are acquired by the terminal device according to the user input and at which the touchscreen of the terminal device is physically covered.

Optionally, in step S1031 and step S1032, the preset instruction includes any one of the following instructions or a combination of multiple instructions: a screen-off instruction, a power-off instruction, an instruction for returning to a previous step, a hang-up instruction, and an instruction for returning to a main user interface. The screen-off instruction may be used to instruct the terminal device to switch from a screen-on state to a screen-off state. The screen-off state may include: the terminal device is in a standby state or in a sleep state, or may further include a state in which the terminal device only does not supply power to the screen. In all the foregoing states, a purpose for saving power may be achieved. The instruction for returning to a previous step may be used to instruct the terminal device to return, according to a stored operation sequence, to an user interface appeared before a current operation. The hang-up instruction may be used to instruct the terminal device in a call conversation to terminate the current call conversation. The instruction for returning to a main user interface may be used to instruct the terminal device to return to a main user interface of the terminal device, where the main user interface is generally the first user interface that appears after the terminal device is unlocked, and is a main user interface of a desktop.

In this embodiment of the present invention, a screen-off/power-off/returning/hang-up scheme is used, which resolves a series of technical problems in the prior art that are brought by an inflexible operation of the terminal device. For example, the operation is completed by pressing a physical button or a soft key, which causes hardware wear or extra power consumption. Technical effects of saving power, reducing hardware wear, and protecting user privacy are brought without adding hardware, thereby significantly improving user experience.

Optionally, step S103 may specifically include: S1033. If the covered area is larger than the preset area within the second preset time, and the covered region forming the covered area is in a preset position, execute the preset instruction. Step S1033 includes two conditions. Condition 3: the covered region forming the covered area is in the preset position; condition 2: the covered area is larger than the preset area within the second preset time. When both condition 3 and condition 2 are satisfied, the terminal device executes the preset instruction. The terminal device may determine condition 3 and condition 2 at the same time, or may, after one condition is satisfied, determine the other condition, which is not limited in this embodiment of the present invention. Condition 2 may be the same as a method for determining whether the covered area is larger than the preset area within the first preset time in step S1031, which is not described herein again. The covered region in condition 3 may be all covered regions forming the covered area, or may be some ("some" includes the case of "one") covered regions forming the covered area, which is not limited in this embodiment of the present invention. The preset position is one or several preset regions of an outer surface of the terminal device, or may, for example, be the top or the bottom of the touchscreen, which is also not limited in this embodiment of the present invention. Optionally, using a mobile phone as an example, the preset position may be a specific position on a rear face of the mobile phone (a side with a touchscreen is referred to as a front face of the mobile phone, and a side opposite to the touchscreen is a rear face of the mobile phone). When the user covers the specific position on the rear face of the mobile phone, and a coverage area reaches the preset area, a corresponding operation is executed. It is determined, according to the position, whether a preset operation is executed, so that the terminal device can complete more elaborate user instructions, and the user can complete more operations by means of coverage, which helps the user use the terminal device. Optionally, step S103 may specifically include: S1034. If the covered area is larger than the preset area within the second preset time, and the covered region forming the covered area satisfies a preset shape, execute the preset instruction. Step S1034 includes two conditions. Condition 4: the covered region forming the covered area satisfies the preset shape; condition 2: the covered area is larger than the preset area within the second preset time. When both condition 4 and condition 2 are satisfied, the terminal device executes the preset instruction. The terminal device may determine condition 3 and condition 2 at the same time, or may, after one condition is satisfied, determine the other condition, which is not limited in this embodiment of the present invention. Condition 2 may be the same as a method for determining whether the covered area is larger than the preset area within the first preset time in step S1031, which is not described herein again. The covered region in condition 4 may be all covered regions forming the covered area, or may be some ("some" includes the case of "one") covered regions forming the covered area, which is not limited in this embodiment of the present invention. The preset shape is one or several preset shapes on an outer surface of the terminal device; for example, may be a shape of a palm of the user and a shape of a finger of the user, which is also not limited in this embodiment of the present invention. It is determined, according to the preset shape, whether the preset instruction is executed. A requirement of the user for a personal operation may be satisfied according to a personalized preset shape. For example, a corresponding instruction is executed only when the terminal device recognizes that an owner of the device covers the terminal device with the hand. Because shapes of hands of users may be different, the terminal device may only complete an operation of a specific user easily, thereby enhancing security of the terminal device.

Optionally, in step S103, a condition for executing the preset instruction may include any one of the following conditions or a combination of multiple conditions: condition 1, condition 2, condition 3, and condition 4. This embodiment of the present invention sets no limitation thereto.

Optionally, when the terminal device is in an incoming call state, step S102 is not executed, or step S103 is not executed. The incoming call state refers to a state in which the terminal device has an incoming and/or connected call.

Optionally, in steps S101, S102, and S103 of this embodiment of the present invention, the covered area may be a quantity of covered points, and the preset area may be a quantity of preset points. A scheme of this embodiment of the present invention may further be a method for processing a terminal device, where the method includes: acquiring a user input; acquiring a quantity of covered points of the terminal device according to the user input; and if the quantity of covered points is larger than the quantity of preset points, executing the preset instruction. Optionally, the quantity of covered points includes: a quantity of points of at least one covered region of the terminal device, where the covered region is formed by consecutive covered points. Specifically, as shown in FIG. 2, the quantity of covered points is a quantity of points that are covered. As shown in FIG. 3, the quantity of covered points may be a quantity of some or all covered points. If the quantity is larger than the quantity of preset points, the preset instruction is executed, and different thresholds may be set for the quantity of preset points according to different attributes of various touchscreens or outer surfaces of the terminal device. Optionally, for example, using the capacitive touchscreen as an example, each capacitor that can perceive whether to be covered is one covered point. When a quantity of covered points reaches the quantity of preset points, the preset instruction may be executed. In this embodiment of the present invention, a scheme in which a preset instruction is executed according to a covered area of a terminal device is used. Without adding hardware, hardware wear of a device caused by a user is reduced, power of the terminal device is saved, operation efficiency and flexibility of the user are improved, and user experience is significantly improved.

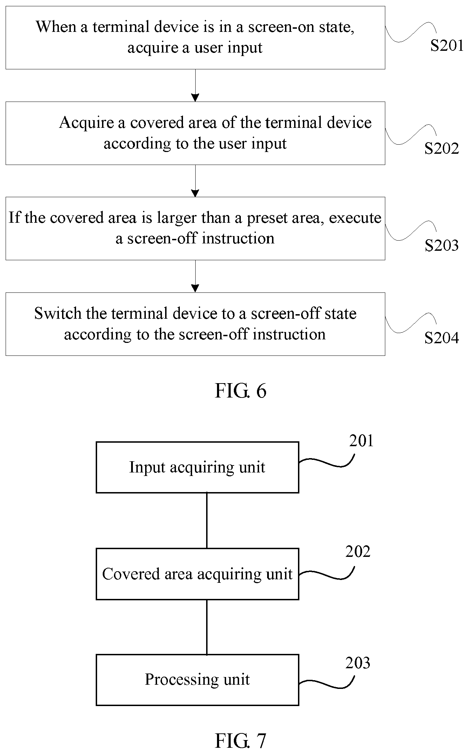

Optionally, as shown in FIG. 6, using an example in which the preset instruction is the screen-off instruction, the following introduces a scheme of this embodiment of the present invention with reference to the terminal device including the touchscreen. The scheme of this embodiment of the present invention may include the following steps: S201, S202, S203, and S204.

S201. When the terminal device is in a screen-on state, acquire a user input.

The screen-on state of the terminal device means that the terminal device is in an active state. In this state, the user input may be acquired, and the user input is processed and is presented to a user in a specific manner. For a terminal device including a touchscreen, the screen-on state is that the touchscreen of the terminal device is in a working state in which a specific electronic document is displayed on a screen by using a specific transmission device or apparatus and then is reflected to human eyes. In this state, the terminal device may acquire coverage that is performed on the touchscreen by the user.

S202. Acquire a covered area of the terminal device according to the user input.

Step S202 may be the same as step S102, or may be specifically that a covered area of the touchscreen of the terminal device is acquired according to the coverage that is performed on the touchscreen by the user.

S203. If the covered area is larger than a preset area, execute a screen-off instruction. A method for determining whether the covered area is larger than the preset area in step S203 may be the same as a method for determining whether the covered area is larger than the preset area in step S103. The screen-off instruction is an instruction for instructing the terminal device to enter a standby or a sleep state.

Step S203 may include: S2031. If the covered area is larger than the preset area within first preset time, execute the screen-off instruction; or, S203 may include: S2032. If the covered region moves according to a preset track, and the covered area is larger than the preset area within second preset time, execute the screen-off instruction.

S204. Switch the terminal device to a screen-off state according to the screen-off instruction.

The screen-off instruction may be used to instruct the terminal device to switch from a screen-on state to a screen-off state. The screen-off state may include: the terminal device is in a standby state or in a sleep state, or may further include a state in which the terminal device only does not supply power to the screen. In all the foregoing states, a purpose for saving power may be achieved. Optionally, for example, steps S201-S204 may describe the following two states: First, when the terminal device is in the screen-on state, the user covers the touchscreen with a hand, and the terminal device switches to the screen-off state; or, second, when the terminal device is in the screen-on state, the user flicks the touchscreen with a hand, and the terminal device switches to the screen-off state.

In this embodiment of the present invention, a screen-off scheme is used, which resolves a series of technical problems in the prior art that are brought by an inflexible operation of switching the terminal device from the screen-on state to the screen-off state. For example, fixed time is generally set, and when the time expires, the screen is off automatically. The screen-off manner generally causes a waste of power, or causes a technical problem that personal information is disclosed due to untimely screen-off. For another example, the screen is off by pressing a power button, which causes hardware wear, or causes a technical problem that personal information is disclosed due to untimely covering of the screen. In a technical solution of this embodiment of the present invention, a user directly covers a touchscreen to achieve a purpose for switching the terminal device to the screen-off state, which brings technical effects of saving power, reducing hardware wear, and protecting user privacy, thereby significantly improving user experience.

### Embodiment 2

FIG. 7 is a schematic structural diagram of a terminal device according to Embodiment 2. As shown in FIG. 7, the terminal device of this embodiment of the present invention includes:
an input acquiring unit 201, configured to acquire a user input;
a covered area acquiring unit 202, configured to acquire a covered area of the terminal device according to the user input acquired by the input acquiring unit 201; and
a processing unit 203, configured to: receive the covered area acquired by the covered area acquiring unit 202, and if the covered area is larger than a preset area, execute a preset instruction.

The input acquiring unit 201 may be configured to execute the method of step S101 in Embodiment 1, the covered area acquiring unit 202 may be configured to execute the method of step S102 in Embodiment 1, and the processing unit 203 may be configured to execute the method of step S103 in Embodiment 1. For a specific method, refer to description of the method in Embodiment 1, which is not described herein again. It should be understood that steps that can be executed by the input acquiring unit 201, the covered area acquiring unit 202, and the processing unit 203 are not limited to S101, S102, and S103.

Optionally, the covered area acquired by the covered area acquiring unit 202 includes: an area of at least one covered region of the terminal device, where the covered region is formed by consecutive covered points.

Optionally, the covered area acquiring unit is specifically configured to: when the covered area includes an area of one covered region, acquire the area of the covered region; or when the covered area includes areas of at least two covered regions, acquire a sum of the areas of the at least two covered regions.

Optionally, the covered area acquiring unit is specifically configured to: when the covered area includes areas of at least two covered regions, acquire an area of a largest covered region.

Optionally, the processing unit 203 is specifically configured to: receive the covered area acquired by the covered area acquiring unit, and if the covered area is larger than the preset area within first preset time, execute the preset instruction. The processing unit 203 may be configured to execute the method of step S1031 in Embodiment 1. For a specific method, refer to description of the method in Embodiment 1, which is not described herein again.

Optionally, the processing unit 203 is specifically configured to: receive the covered area acquired by the covered area acquiring unit, and if the covered region moves according to a preset track, and the covered area is larger than the preset area within second preset time, execute the preset instruction. The processing unit 203 may be configured to execute the method of step S1032 in Embodiment 1. For a specific method, refer to description of the method in Embodiment 1, which is not described herein again.

Optionally, in the processing unit, that the covered region moves according to a preset track specifically includes that at least one covered region moves according to one preset track; or, at least two covered regions move according to at least two preset tracks.

Optionally, in the processing unit, that the covered region moves according to a preset track includes that the covered region moves from one end of the terminal device to another end of the terminal device, where the movement includes any one of the following movements or a combination of multiple movements: the covered region moves from an upper end of the terminal device to a lower end of the terminal device; the covered region moves from the lower end of the terminal device to the upper end of the terminal device; the covered region moves from a left end of the terminal device to a right end of the terminal device; and the covered region moves from the right end of the terminal device to the left end of the terminal device.

Optionally, in the processing unit, the preset instruction includes any one of the following instructions or a combination of multiple instructions: a screen-off instruction, a power-off instruction, an instruction for returning to a previous step, a hang-up instruction, and an instruction for returning to a main user interface, where the screen-off instruction is used to instruct the terminal device to switch from a screen-on state to a screen-off state.

Optionally, in the processing unit, the preset area is N times a surface area of the terminal device; or, the preset area is N times an area of a touchscreen of the terminal device, where N is greater than 0 and less than 1.

Optionally, as shown in FIG. 8, the terminal device further includes: a state acquiring unit 204, where the state acquiring unit 204 is configured to: acquire a state of the terminal device, and send the state to the input acquiring unit; and when the state that is acquired by the state acquiring unit and that is of the terminal device is a screen-on state, the input acquiring unit is configured to acquire the user input.

This embodiment of the present invention provides a terminal device, which resolves a series of technical problems in the prior art that are brought by an inflexible operation of the terminal device. For example, the operation is completed by pressing a physical button or a soft key, which causes hardware wear or extra power consumption. Technical effects of saving power, reducing hardware wear, and protecting user privacy are brought without adding hardware, thereby significantly improving user experience.

### Embodiment 3

FIG. 9 is a schematic structural diagram of a terminal device according to Embodiment 3 of the present invention. As shown in FIG. 9, a terminal device is provided, where the terminal device includes: a touchscreen 302, configured to acquire a user input; a processor 301, configured to acquire a covered area of the terminal device according to the user input acquired by the touchscreen; and the processor 301 is further configured to: if the covered area is larger than a preset area, execute a preset instruction.

It should be understood that the terminal device shown in FIG. 9 is merely an example of a terminal device. The terminal device may have parts more than or less than those shown in the figure, may combine two or more parts, or may have different part configurations. Various parts shown in the figure may be implemented in hardware including one or more signal processing and/or application-specific integrated circuits, in software, or in a combination of hardware and software.

The touchscreen 302 is configured to execute the method in Embodiment 1. For a specific method, refer to the method of step S101 in Embodiment 1, which is not described herein again. The touchscreen 302 is an input user interface and an output user interface between a mobile phone and a user. In addition to having functions of acquiring user touch information and a control instruction, the touchscreen 302 further presents a visual output to the user, where the visual output may include a graph, a text, an icon, a video, and the like.

The processor 301 is configured to execute the methods of S102 and S103 in Embodiment 1. For specific methods, refer to the method in Embodiment 1, which is not described herein again. Optionally, the processor 301 may further be configured to execute the methods of S1031, S1032, S1033, and S1034 in Embodiment 1. For specific methods, refer to the method in Embodiment 1, which is not described herein again. The processor 301 is a control center of the terminal device; uses various user interfaces and lines to connect all parts of an entire terminal device; and executes various functions of the terminal device and processes data by running or executing a software program and/or a module that are/is stored in a memory 303 and by invoking data stored in the memory 303, thereby performing overall monitoring on the terminal device. It should be understood that the foregoing functions are only one type of functions that can be executed by the processor 301. This embodiment of the present invention sets no limitation on other functions. Optionally, in this embodiment of the present invention, description of the covered area, the covered region, the preset area, the preset time, the preset track, the preset instruction, and the like may be the same as the scope in Embodiment 1 of the present invention. For details, refer to description of the foregoing content in Embodiment 1 of the present invention, which is not described herein again.

This embodiment of the present invention provides a terminal device, which resolves a series of technical problems in the prior art that are brought by an inflexible operation of the terminal device. For example, the operation is completed by pressing a physical button or a soft key, which causes hardware wear or extra power consumption. Technical effects of saving power, reducing hardware wear, and protecting user privacy are brought without adding hardware, thereby significantly improving user experience.

With descriptions of the foregoing embodiments, a person skilled in the art may clearly understand that the embodiments of the present invention may be implemented by hardware, firmware or a combination thereof. When the embodiments of the present invention are implemented by software, the foregoing functions may be stored in a terminal-readable medium or transmitted as one or more instructions or code in the terminal-readable medium. The terminal-readable medium includes a terminal storage medium and a communications medium. Optionally, the communications medium includes any medium that enables a terminal program to be transmitted from one place to another. The storage medium may be any available medium that can be accessed by a terminal. The following provides an example but does not impose a limitation: The terminal-readable medium may include a RAM, a ROM, an EEPROM, a CD-ROM, or another optical disc storage or a disk storage medium, or another magnetic storage terminal device, or any other medium that can carry or store expected program code in a form of an instruction or a data structure and can be accessed by a terminal. In addition, any connection may be appropriately defined as a terminal-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in a definition of a medium to which they belong. For example, a disk (Disk) and disc (disc) used in the embodiments of the present invention includes a compact disc (CD), a laser disc, an optical disc, a digital versatile disc (DVD), a floppy disk, and a Blu-ray disc. Optionally, the disk generally copies data by a magnetic means, whereas the disc copies data optically by a laser means. The foregoing combination should also be included in the protection scope of the terminal-readable medium.

In short, the foregoing descriptions are only embodiments of the technical solutions of the present invention, but are not intended to limit the protection scope of the present invention. Any modification, equivalent replacement, or improvement made without departing from the spirit and principle of the present invention shall fall within the protection scope of the present invention.

## Claims

1. A method for processing a terminal device, wherein the method comprises:
acquiring a user input;
acquiring a covered area of the terminal device according to the user input; and
if the covered area is larger than a preset area, executing a preset instruction.

2. The method according to claim 1, wherein the covered area comprises: an area of at least one covered region of the terminal device, wherein the covered region is formed by consecutive covered points.

3. The method according to claim 2, wherein
when the covered area comprises an area of one covered region, the covered area is the area of the covered region; or
when the covered area comprises areas of at least two covered regions, the covered area is a sum of the areas of the at least two covered regions.

4. The method according to claim 2, wherein
when the covered area comprises areas of at least two covered regions, the covered area is an area of a largest covered region.

5. The method according to any one of claims 1 to 4, wherein if the covered area is larger than the preset area, the executing a preset instruction specifically comprises:
if the covered area is larger than the preset area within first preset time, executing the preset instruction; or
if the covered region moves according to a preset track, and the covered area is larger than the preset area within second preset time, executing the preset instruction.

6. The method according to claim 5, wherein that the covered region moves according to a preset track specifically comprises that at least one covered region moves according to one preset track; or, at least two covered regions move according to at least two preset tracks.

7. The method according to claim 5 or 6, wherein that the covered region moves according to a preset track comprises that the covered region moves from one end of the terminal device to another end of the terminal device, wherein
the movement comprises any one of the following movements or a combination of multiple movements:
the covered region moves from an upper end of the terminal device to a lower end of the terminal device;
the covered region moves from the lower end of the terminal device to the upper end of the terminal device;
the covered region moves from a left end of the terminal device to a right end of the terminal device; and
the covered region moves from the right end of the terminal device to the left end of the terminal device.

8. The method according to any one of claims 1 to 7, wherein the preset instruction comprises any one of the following instructions or a combination of multiple instructions:
a screen-off instruction, a power-off instruction, an instruction for returning to a previous step, a hang-up instruction, and an instruction for returning to a main user interface; wherein
the screen-off instruction is used to instruct the terminal device to switch from a screen-on state to a screen-off state.

9. The method according to any one of claims 1 to 8, wherein
the preset area is N times a surface area of the terminal device; or
the preset area is N times an area of a touchscreen of the terminal device, wherein
N is greater than 0 and less than 1.

10. The method according to any one of claims 1 to 9, wherein the acquiring a user input specifically comprises: when the terminal device is in a screen-on state, acquiring the user input.

11. A terminal device, wherein the terminal device comprises:
an input acquiring unit, configured to acquire a user input;
a covered area acquiring unit, configured to acquire a covered area of the terminal device according to the user input acquired by the input acquiring unit; and
a processing unit, configured to: receive the covered area acquired by the covered area acquiring unit, and if the covered area is larger than a preset area, execute a preset instruction.

12. The terminal device according to claim 11, wherein
the covered area acquired by the covered area acquiring unit comprises: an area of at least one covered region of the terminal device, wherein the covered region is formed by consecutive covered points.

13. The terminal device according to claim 12, wherein
the covered area acquiring unit is specifically configured to: when the covered area comprises an area of one covered region, acquire the area of the covered region; or when the covered area comprises areas of at least two covered regions, acquire a sum of the areas of the at least two covered regions.

14. The terminal device according to claim 12, wherein
the covered area acquiring unit is specifically configured to: when the covered area comprises areas of at least two covered regions, acquire an area of a largest covered region.

15. The terminal device according to any one of claims 11 to 14, wherein
the processing unit is specifically configured to: receive the covered area acquired by the covered area acquiring unit, and if the covered area is larger than the preset area within first preset time, execute the preset instruction; or if the covered region moves according to a preset track, and the covered area is larger than the preset area within second preset time, execute the preset instruction.

16. The terminal device according to claim 15, wherein in the processing unit, that the covered region moves according to a preset track specifically comprises that at least one covered region moves according to one preset track; or, at least two covered regions move according to at least two preset tracks.

17. The terminal device according to claim 15 or 16, wherein in the processing unit, that the covered region moves according to a preset track comprises that the covered region moves from one end of the terminal device to another end of the terminal device, wherein the movement comprises any one of the following movements or a combination of multiple movements: the covered region moves from an upper end of the terminal device to a lower end of the terminal device; the covered region moves from the lower end of the terminal device to the upper end of the terminal device; the covered region moves from a left end of the terminal device to a right end of the terminal device; and the covered region moves from the right end of the terminal device to the left end of the terminal device.

18. The terminal device according to any one of claims 11 to 17, wherein in the processing unit, the preset instruction comprises any one of the following instructions or a combination of multiple instructions: a screen-off instruction, a power-off instruction, an instruction for returning to a previous step, a hang-up instruction, and an instruction for returning to a main user interface; wherein the screen-off instruction is used to instruct the terminal device to switch from a screen-on state to a screen-off state.

19. The terminal device according to any one of claims 11 to 18, wherein in the processing unit, the preset area is N times a surface area of the terminal device; or
the preset area is N times an area of a touchscreen of the terminal device, wherein
N is greater than 0 and less than 1.

20. The terminal device according to any one of claims 11 to 18, wherein the terminal device further comprises: a state acquiring unit, wherein the state acquiring unit is configured to: acquire a state of the terminal device, and send the state to the input acquiring unit; and
when the state that is acquired by the state acquiring unit and that is of the terminal device is a screen-on state, the input acquiring unit is configured to acquire the user input.

21. A terminal device, wherein the terminal device comprises:
a touchscreen, configured to acquire a user input; and
a processor, configured to acquire a covered area of the terminal device according to the user input acquired by the touchscreen; wherein
the processor is further configured to: if the covered area is larger than a preset area, execute a preset instruction.

22. The terminal device according to claim 21, wherein
the covered area acquired by the processor comprises: an area of at least one covered region of the terminal device, wherein the covered region is formed by consecutive covered points.

23. The terminal device according to claim 22, wherein
the processor is specifically configured to: when the covered area comprises an area of one covered region, acquire the area of the covered region; or when the covered area comprises areas of at least two covered regions, acquire a sum of the areas of the at least two covered regions.

24. The terminal device according to claim 22, wherein
the processor is specifically configured to: when the covered area comprises areas of at least two covered regions, acquire an area of a largest covered region.

25. The terminal device according to any one of claims 21 to 24, wherein
the processor is specifically configured to: if the covered area is larger than the preset area within first preset time, execute the preset instruction; or if the covered region moves according to a preset track, and the covered area is larger than the preset area within second preset time, execute the preset instruction.

26. The terminal device according to claim 25, wherein in the processor, that the covered region moves according to a preset track specifically comprises that at least one covered region moves according to one preset track; or, at least two covered regions move according to at least two preset tracks.

27. The terminal device according to claim 25 or 26, wherein in the processing unit, that the covered region moves according to a preset track comprises that the covered region moves from one end of the terminal device to another end of the terminal device, wherein the movement comprises any one of the following movements or a combination of multiple movements: the covered region moves from an upper end of the terminal device to a lower end of the terminal device; the covered region moves from the lower end of the terminal device to the upper end of the terminal device; the covered region moves from a left end of the terminal device to a right end of the terminal device; and the covered region moves from the right end of the terminal device to the left end of the terminal device.

28. The terminal device according to any one of claims 21 to 27, wherein in the processor, the preset instruction comprises any one of the following instructions or a combination of multiple instructions: a screen-off instruction, a power-off instruction, an instruction for returning to a previous step, a hang-up instruction, and an instruction for returning to a main user interface, wherein the screen-off instruction is used to instruct the terminal device to switch from a screen-on state to a screen-off state.

29. The terminal device according to any one of claims 21 to 28, wherein in the processor, the preset area is N times a surface area of the terminal device; or
the preset area is N times an area of a touchscreen of the terminal device, wherein
N is greater than 0 and less than 1.

30. The terminal device according to any one of claims 21 to 29, wherein
the touchscreen is specifically configured to: when the terminal device is in a screen-on state, acquire the user input.
